Europäisches Patentamt

European Patent Office

Office européen des brevets

(19)

(11) Veröffentlichungsnummer: **0 160 324**
**A2**

## (12) EUROPÄISCHE PATENTANMELDUNG

(21) Anmeldenummer: **85105430.4**

(22) Anmeldetag: **03.05.85**

(51) Int. Cl.⁴: **H 04 B 9/00**

(30) Priorität: **04.05.84 DE 3416493**

(43) Veröffentlichungstag der Anmeldung:
**06.11.85 Patentblatt 85/45**

(84) Benannte Vertragsstaaten:
**AT CH DE FR GB IT LI**

(71) Anmelder: **Standard Elektrik Lorenz Aktiengesellschaft**
**Lorenzstrasse 10**
**D-7000 Stuttgart 40(DE)**

(72) Erfinder: **Gündner, Hans Martin, Dr.**
**Liebigstrasse 4/1**
**D-7141 Benningen(DE)**

(74) Vertreter: **Graf, Georg Hugo, Dipl.-Ing. et al,**
**c/o Standard Elektrik Lorenz AG Patent- und**
**Lizenzwesen Postfach 300 929 Kurze Strasse 8**
**D-7000 Stuttgart 30(DE)**

(54) Optische Empfangseinrichtung.

(57) Optische Empfangseinrichtung, die aus einem optischen Dämpfungsglied (1), einem optisch-elektrischen Wandler (2), einem Verstärker (3) und einer automatischen Pegelregelungsschaltung (4) besteht. Das optische Dämpfungsglied (1) besteht aus einem elektro-optischen Modulator, dessen Dämpfung von der automatischen Pegelregelungsschaltung (4) elektrisch eingestellt wird.

Fig 1

EP 0 160 324 A2

H.M.Gündner-4

Optische Empfangseinrichtung

Die Erfindung bezieht sich auf eine optische Empfangseinrichtung gemäß dem Oberbegriff des Anspruchs 1.

Bei den üblichen Schaltungen ist einem optisch-elektrischen Wandler ein elektronisch regelbarer Verstärker nachgeschaltet, der unterschiedliche Empfangslichtpegel ausgleicht und auf einen Pegel verstärkt, den ein nachfolgender Signalregenerator zur Signalaufbereitung benötigt. Aus der DE OS 32 33 146 ist ein solcher Verstärker bekannt. Es bereitet allerdings erhebliche Schwierigkeiten den Verstärker so auszulegen, daß er sowohl eine hohe Empfindlichkeit als auch einen großen Regelbereich besitzt. Um hohe Lichtpegel verarbeiten zu

können, wird daher ein veränderliches optisches Dämpfungsglied vor dem optisch-elektrischen Wandler angeordnet, das auf den jeweils erforderlichen Dämpfungswert mechanisch einzustellen ist. Gleichzeitig ist damit aber eine erhebliche Empfindlichkeitseinbuße verbunden.

Der Erfindung liegt die Aufgabe zugrunde, eine Empfangseinrichtung zu realisieren, die hohe Empfindlichkeit mit großem Regelbereich verbindet. Diese Aufgabe wird mit dem im Anspruch 1 genannten Mittel gelöst. Weitere Einzelheiten können den Unteransprüchen entnommen werden.

Der Vorteil der erfindungsgemäßen Empfangseinrichtung liegt in der elektrischen Einstellung der Dämpfung des optischen Dämpfungsgliedes über einen so großen Bereich, daß der Verstärker nicht oder nur noch in geringem, das heißt leicht realisierbarem Umfang geregelt werden muß. Dadurch wird die Schaltungstechnik vereinfacht und es kann beispielsweise statt eines Transimpedanzverstärkers ein Hochimpedanzverstärker verwendet werden, mit dem in bekannter Weise eine höhere Empfindlichkeit erreicht wird.

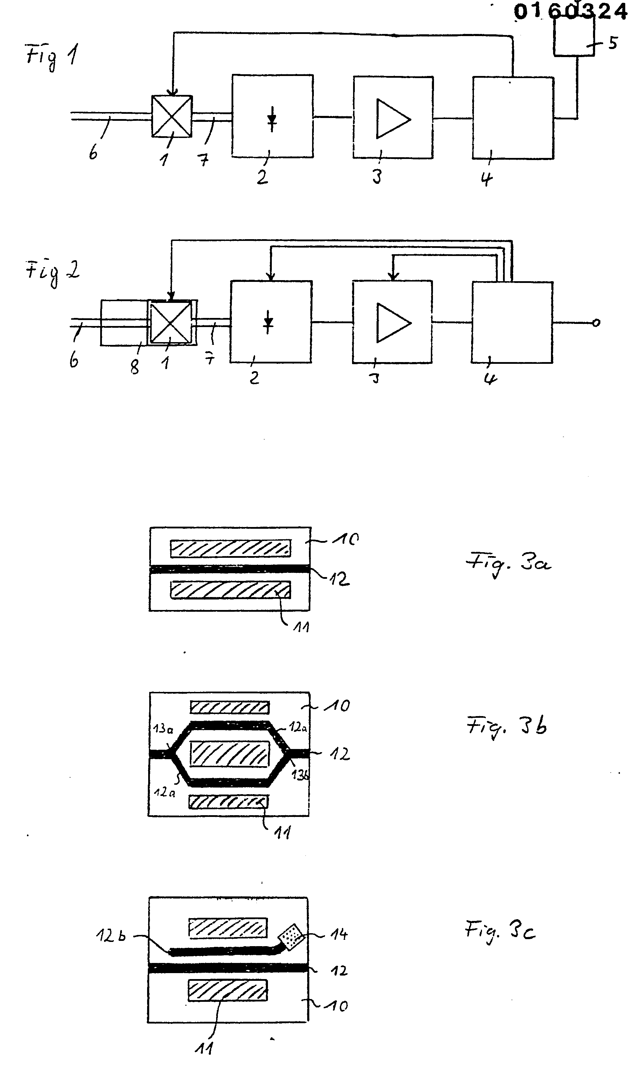

Die optische Empfangseinrichtung wird nun anhand zweier, in den Fig. 1 oder 2 dargestellten Ausführungsbeispielen erläutert.

Ein in einem ersten Lichtwellenleiter 6 ankommendes optisches Signal tritt durch ein elektrisch einstellbares optisches Dämpfungsglied 1 und gelangt durch einen zweiten Lichtwellenleiter 7 auf einen optisch-elektrischen Wandler 2, im folgenden Photodetektor genannt. Das vom

0160324

H.M.Gündner-4

Photodetektor 2 gelieferte elektrische Signal wird zuerst von einem Verstärker 3 verstärkt und dann einer automatischen Pegelregelungsschaltung 4 zugeführt. Diese erzeugt mit Hilfe eines Spitzenwertdetektors eine elektrische Regelspannung, die das Dämpfungsglied 1 so einstellt, daß am Eingang eines Signalregenerators 5, der der Pegelregelungsschaltung nachgeschaltet ist, ein für die Aufbereitung des elektrischen Signals ausreichender Pegel vorhanden ist.

In Fig. 1 bestehen die Lichtwellenleiter 6, 7 aus je einer Monomodefaser, durch die in Verbindung mit einer sehr kleinflächigen Photodiode als Photodetektor 2 maximale Empfindlichkeit der Empfangseinrichtung erreicht wird.

In Fig. 2 ist das Dämpfungsglied 1 in einen optischen Steckverbinder 8 eingebaut. Der Lichtwellenleiter 7 besteht aus einem kurzen Stück einer Multimode-Faser, die ohne nennenswerte Empfindlichkeitseinbußen einen einfacheren mechanischen Aufbau zuläßt als die Monomode-Faser. Als Photodetektor 2 findet eine Lawinenphotodiode Verwendung, deren Lawinenverstärkung von der automatischen Pegelregelungsschaltung 4 durch eine entsprechende elektrische Spannung eingestellt wird. Auf die gleiche Art ist auch die Verstärkung des Verstärkers 3 einstellbar.

Das optische Dämpfungsglied 1 ist beispielsweise durch einen der nachfolgend beschriebenen elektro-optischen Modulatoren realisiert. Solche Modulatoren sind bekannt (R.Hunsperger: "Integrated Optics: Theory and Technology, Springer Verlag 1982).

H.M.Gündner-4

Fig. 3 zeigt den prinzipiellen Aufbau der Modulatoren, nämlich:

Fig. 3a einen ersten Modulator,

Fig. 3b einen Mach-Zehnder-Typ-Modulator,

Fig. 3c einen Modulator nach Art eines Richtkopplers.

Die Modulatoren sind beispielsweise auf einem Substrat 10 aus $LiNbO_3$ aufgebaut. In diesem Substrat 10 sind mindestens zwei Elektroden 11 und mindestens ein Lichtwellenleiter 12 vorhanden, der zwischen den Elektroden 11 angeordnet ist. Durch Anlegen einer elektrischen Spannung von einigen Volt an die Elektroden 11 ändern sich die optischen Eigenschaften des Materials der Lichtwellenleiter aufgrund des elektro-optischen (Pockels-) Effekts.

Beim elektro-optischen Modulator nach Fig. 3a ist der Lichtwellenleiter 12 so dimensioniert, daß er bei einem ersten elektrischen Potential $V_1$ optisch undurchlässig ist und bei einem zweiten elektrischen Potential $V_2$ volle Transmission des Lichtes im Grundmode erreicht ist. Die Dämpfung des Lichtes ist im Potentialbereich zwischen $V_1$ und $V_2$ kontinuierlich einstellbar.

Bei einer anderen Ausführungsform besteht das Substrat aus einem Halbleiter, beispielsweise GaAs. Zur Änderung der optischen Eigenschaften wird der Franz-Keldysh-Effekt ausgenutzt.

H.M.Gündner-4


Fig. 3b zeigt einen Mach-Zehnder-Typ-Modulator. Der Lichtwellenleiter 12 ist im Bereich der drei Elektroden 11 in zwei Wellenleiter 12a verzweigt, die jeweils zwischen zwei Elektroden liegen. Dadurch wird das ankommende Licht an einer Stelle 13a in zwei Teilwellen aufgespalten. Durch geeignete Potentiale ist eine Phasenverschiebung von bis zu 180° zwischen den sich in den beiden Wellenleitern 12a ausbreitenden Teilwellen einstellbar. Die Dämpfung des Lichtes ergibt sich durch Interferenz der beiden Teilwellen bei der Zusammenführung der Wellenleiter 12a an der Stelle 13b.

Der Modulator nach Fig. 3c beruht auf dem Prinzip eines Richtkopplers. Zwischen den Elektroden 11 ist außer dem durchgehenden Lichtwellenleiter 12 ein weiterer Lichtwellenleiter 12b vorhanden, an dessen Ende ein Wellensumpf 14 angeordnet ist. Durch geeignete Potentiale an den Elektroden 11 sind die Phasengeschwindigkeiten des Lichts in den Lichtwellenleitern 12, 12b so einstellbar, daß das im Lichtwellenleiter 12 ankommende Licht entweder dort verbleibt oder zum Teil oder ganz in den Lichtwellenleiter 12b übergekoppelt und im Wellensumpf 14 vernichtet wird.

- 1 -

0160324

STANDARD ELEKTRIK LORENZ
   AKTIENGESELLSCHAFT
   S T U T T G A R T

H.M.Gündner-4

Patentansprüche

1. Optische Empfangseinrichtung bestehend aus einem op- tischen Dämpfungsglied (1), einem optisch-elektrischen Wandler (2), einem Verstärker (3) und einer automa- tischen Pegelregelschaltung (4), d a d u r c h   g e k e n n z e i c h n e t,   daß die Dämpfung des optischen Dämpfungsgliedes (1) elektrisch einstellbar ist.

2. Optische Empfangseinrichtung nach Anspruch 1, dadurch gekennzeichnet, daß das optische Dämpfungsglied (1) Stellglied eines Regelkreises ist, dessen andere Teile der optisch-elektrische Wandler (2), der Verstärker (3) und die automatische Pegelregelschaltung (4) sind.

ZT/P1-Jt/V, 02.05.1984                                  ./.

0160324

H.M.Gündner-4

3. Optische Empfangseinrichtung nach Anspruch 1 oder 2, dadurch gekennzeichnet, daß außer dem optischen Dämpfungsglied (1) auch der optisch-elektrische Wandler (2) oder der Verstärker (3), (oder beide) Stellglied des Regelkreises ist, und daß die Stellgrößen in der automatischen Pegelregelungsschaltung (4) erzeugt werden.

4. Optische Empfangseinrichtung nach einem der vorangehenden Ansprüche, dadurch gekennzeichnet, daß das optische Dämpfungsglied (1) ein elektro-optischer Modulator ist, der auf Halbleiterbasis oder auf der Basis von LiNbO$_3$ aufgebaut ist.

5. Optische Empfangseinrichtung nach einem der vorangehenden Ansprüche, dadurch gekennzeichnet, daß das optische Dämpfungsglied (1) in einen optischen Steckverbinder eingebaut ist.

6. Optische Empfangseinrichtung nach einem der vorangehenden Ansprüche, dadurch gekennzeichnet, daß das optische Dämpfungsglied (1), der optisch-elektrische Wandler (2), der Verstärker (3) und die automatische Pegelregelungsschaltung (4) auf einem Chip monolithisch integriert sind.

ZT/P1-Jt/V, 02.05.1984                              ./.

- 1/1 -

0160324

Fig 1

Fig 2

Fig. 3a

Fig. 3b

Fig. 3c

H.M.Gündner-4